# EUROPÄISCHE PATENTSCHRIFT

(11) **EP 2 036 945 B1**
(45) Veröffentlichungstag und Bekanntmachung des Hinweises auf die Patenterteilung: **22.05.2013**
(21) Anmeldenummer: 08104980.1
(22) Anmeldetag: 07.08.2008
(51) Int. Cl.: C08K 3/26, C08K 3/22, C08K 9/06, C08L 21/00, B60S 1/38

(54) **Gummimaterial**
Rubber material
Matériau en caoutchouc

(30) Priorität: 12.09.2007 DE 102007043482
(43) Veröffentlichungstag der Anmeldung: 18.03.2009
(73) Patentinhaber: Robert Bosch GmbH, 70442 Stuttgart (DE)
(72) Erfinder: Pieters, Eric, 6369 AK, Simpelveld (NL)

(56) Entgegenhaltungen:
- WO-A-94/05726
- WO-A-2004/007606
- DE-A1- 3 643 825
- US-A1- 2002 198 299

## Beschreibung

Die vorliegende Erfindung bezieht sich auf ein Gummimaterial für Wischblätter von Scheibenwischern sowie auf ein Verfahren zur Herstellung desselben nach dem Oberbegriff der unabhängigen Ansprüche.

### Stand der Technik

Übliche Wischblätter für Scheibenwischer sind aus Gummimaterialien gefertigt, die neben einer hohen Beständigkeit gegenüber Ozon und UV-Strahlung insbesondere eine hohe Abriebbeständigkeit aufweisen. Dazu werden entsprechende Wischgummis aus Gummimaterialien gefertigt, die neben den eigentlichen Gummikomponenten und üblichen Zusatzstoffen einen nennenswerten Gehalt an Füllstoffen aufweisen. Dabei wird als Füllstoff insbesondere Ruß verwendet.

Auf der anderen Seite sind die mechanischen Eigenschaften eines mit Ruß gefüllten Gummimaterials durch das Eigenschaftsprofil von Ruß geprägt und somit die funktionalen Eigenschaften des Wischblattes wie Hitzebeständigkeit und Abriebsbeständigkeit entsprechend beschränkt und niedrige Reibungskoeffizienten nur in gewissem Umfang erreichbar. Darüber hinaus enthalten übliche technische Ruße einen gewissen Anteil an polyaromatischen Kohlenwasserstoffen. Diese polyaromatischen Kohlenwasserstoffe werden mittlerweile auch bereits in geringen Konzentrationen im ppm-Bereich als karzinogen eingestuft. Somit besteht die Gefahr, dass Wischgummis, die derartige technische Ruße als Füllstoffe enthalten, einen höheren Anteil an polyaromatischen Kohlenwasserstoffen aufweisen als gesetzlich zugelassen.

Es besteht somit ein Bedarf an Ersatzfüllstoffen für Wischgummis für Wischblätter von Scheibenwischern, die die oben genannten Nachteile vermeiden und ein geeignetes mechanisches Eigenschaftsprofil eines resultierenden Wischblattes ermöglichen. So sind aus der US 5,387,664 bereits Gummimaterialien und Wischblätter bekannt, die als Füllstoff unter anderem Silikate, Calciumcarbonat und Talk enthalten. Das Eigenschaftsprofil derartiger Wischblätter ist jedoch in tribologischer Hinsicht noch nicht befriedigend.

Weiterhin ist aus der WO2004/007606 A1 und der US 2002/0198299 Alein Gummimaterial bekannt, das als Füllstoff Siliziumdioxid enthält. . Darüber hinaus ist der DE 3643825 A1 eine Isolierschicht für Raketenfeststofftreibsätze zu entnehmen, die ein Bindemittel auf Polyurethan- oder Polybutadienbasis umfasst, sowie als Füllstoff Dolomit.

### Aufgabe und Vorteile der Erfindung

Aufgabe der vorliegenden Erfindung ist es, ein Gummimaterial sowie ein Verfahren zu dessen Herstellung bereitzustellen, mit dem Wischblätter für Scheibenwischer realisiert werden können, die die genannten Nachteile eines Ruß enthaltenden Wischblattes vermeiden und dennoch ein aus tribologischer Sicht befriedigendes Eigenschaftsprofil aufweisen.

Diese Aufgabe wird durch ein Gummimaterial bzw. durch ein Verfahren zu dessen Herstellung mit den kennzeichnenden Merkmalen der unabhängigen Ansprüche in vorteilhafter Weise gelöst.

Dies beruht insbesondere darauf, dass die verwendeten Gummimaterialien Ruß mit einem Anteil von maximal 10 % der gesamten Füllstoffmenge enthalten und somit die Belastung des Gummimaterials mit möglichen polyaromatischen Kohlenwasserstoffen gering gehalten wird. Weiterhin kann das mechanische Eigenschaftsprofil des Wischblatts über die durch Ruß als alleinigen Füllstoff gesetzten physikalischen Grenzen hinaus verbessert werden.

Erfindungsgemäß ist ein Füllstoff des Gummimaterials ein Erdalkalisulfat, ein Erdalkalihydroxid oder ein binäres Erdalkalicarbonat. Die genannten Mineralien führen bei Verwendung als Füllstoff eines Gummimaterials zu einem günstigen Eigenschaftsprofil mit einerseits hoher Abriebbeständigkeit und andererseits geringem Reibungskoeffizienten. Dabei ist insbesondere von Vorteil, wenn das binäre Erdalkalicarbonat Dolomit ist.

Weitere vorteilhafte Ausführungsformen des vorliegenden Gummimaterials ergeben sich aus den Unteransprüchen.

Weiterhin ist von Vorteil, wenn der genannte Füllstoff oberflächenmodifiziert ist und dabei insbesondere silanisiert ist, da auf diese Weise eine wirksame Anbindung des Füllstoffs an die Matrix des Gummimaterials während der Vernetzungsreaktion desselben erfolgt. Alternative Oberflächenmodifizierungen können durch die Behandlung des Füllstoffs mit einem Polyalkohol, einer Carbonsäure, einem Derivat des Guanidins und/oder einem polyvalenten Amin erfolgen.

Besonders vorteilhaft ist es, wenn die Modifizierung der Füllstoffoberfläche vor deren Vermischung mit unvernetzten Gummikomponenten des zu erzeugenden Gummimaterials erfolgt und die Anbindung des oberflächenmodifizierten Füllstoffs an die Matrix des eigentlichen Gummimaterials während einer nachfolgenden Vernetzungsreaktion erfolgt.

### Ausführungsbeispiele

Ein erfindungsgemäßes Gummimaterial geeignet zur Verwendung in Wischgummis von Wischblättern für Scheibenwischer eines Kraftfahrzeugs umfasst zunächst eine Matrix aus einem Gummimaterial, die als Gummikomponenten beispielsweise Naturkautschuk (NR), Polychloropren (CR), EPDM, Isopren (IR), Polybutadien (BR), Styrolbutadien (SBR), Acrylnitrilbutadien (NBR), Mischungen von Acrylnitrilbutadien mit PVC oder Mischungen der genannten Gummimaterialien untereinander aufweist.

Weiterhin enthält das Gummimaterial einen oder mehrere Füllstoffe. Durch geeignete Gestaltung der Füllstoffmischung können die mechanischen Eigenschaften eines resultierenden Wischblatts in hohem Maße beeinflusst werden. Dabei wird erfindungsgemäß lediglich ein begrenzter Gehalt an Ruß als Füllstoff zugesetzt. Auf diese Weise lassen sich die mechanischen Eigenschaften eines resultierenden Wischgummis in größerem Umfang gestalten, und es wird eine potenzielle Gesundheitsgefährdung durch Kontamination mit polyaromatischen Kohlenwasserstoffen vermieden. So enthält das Gummimaterial als alleinigen oder weiteren Füllstoff ein Erdalkalisulfat, ein Erdalkalihydroxid und/oder ein binäres Erdalkalicarbonat. Dabei wird als Erdalkalisulfat insbesondere Bariumsulfat eingesetzt, als Erdalkalihydroxid insbesondere Calciumhydroxid und als binäres Erdalkalicarbonat insbesondere Dolomit verwendet. Diese sogenannten "weißen Füllstoffe" werden dem Gummimaterial mit einem Anteil von bspw. 20 bis 200 Gewichtsteilen, vorzugsweise 20 bis 180 Gewichtsteilen und insbesondere 25 bis 155 Gewichtsteilen bezogen auf 100 Gewichtsteile an zugesetzten Gummikomponenten beigemischt. Ein zusätzlicher Gehalt an Ruß als Füllstoff des Gummimaterials beträgt vorzugsweise weniger als 40 Gewichtsteile pro 100 Gewichtsteilen an Gummikomponenten, wobei der Gesamtgehalt an Füllstoffen im Gummimaterial vorzugsweise auf 40 bis 240 Gewichtsteile bezogen auf 100 Gewichtsteile an zugesetzten Gummikomponenten beschränkt ist.

Neben den bereits genannten weißen Füllstoffen können weitere Füllstoffe der Mischung zugesetzt werden. Dabei eignet sich insbesondere Kieselsäure, Silikate, pyrogene Kieselsäure, Kieselerde, Quarz, Quarzmehl, Silikate wie Calciumsilikat, Aluminiumsilikat, Natrium-Aluminiumsilikat, Talk, Kaolin, Ton, Zinkoxid, Titandioxid, Calcumoxid, Magnesiumoxid, Aluminiumoxid, Eisenoxide, Calciumcarbonat, Magnesiumcarbonat, Kreide, Zinksulfid oder Lithopon.

Als Füllstoff kann Bariumsulfat in seiner natürlich auftretenden mineralischen Form bspw. mit einem Teilchendurchmesser kleiner 60 µm, vorzugsweise kleiner 20 µm, sowie in synthetisch erzeugter Form eingesetzt werden. Synthetisches Bariumsulfat lässt sich durch Aufschluss von Bariummineralen und Überführung in wasserlösliche Chloridsalze darstellen, wobei abschließend eine Fällung des Bariums als Bariumsulfat durch Zugabe einer Nartiumsulfatlösung erfolgt. Die Partikelgröße des synthetisch erzeugten Bariumsulfats kann durch Steuerung des Fällungsprozesses auf Teilchengrößen kleiner 10 µm eingestellt werden. Die Verwendung von Bariumsulfat dieser Teilchengröße führt zu verbesserten Oberflächeneigenschaften eines resultierenden Wischgummis wie einer geringen Oberflächenspannung, Geräuschentwicklung und Friktion, einer erhöhten Wetter- und Wärmebeständigkeit sowie Langzeitfarbbeständigkeit, und einer hohen Beständigkeit gegenüber chemischen Einflüssen wie der Einwirkung von Ölen, Säuren oder Basen, sowie einem verbesserten Wischbild. Weiterhin zeigt Bariumsulfat gute Verarbeitungseigenschaften während der Herstellung eines entsprechenden Gummiprofils. So führt es zu einem verringerten Verschleiß an den zur Gummiverarbeitung eingesetzten Verarbeitungsmaschinen und ist für eine Ausbringung mittels Extruder gut geeignet.

Als Füllstoff kann weiterhin Dolomit eingesetzt werden, wobei insbesondere Dolomit mit einer Teilchengröße von kleiner 20 µm, vorzugsweise kleiner 10 µm, eingesetzt wird. Auf diese Weise resultieren ebenfalls Wischgummiprofile mit kleinen Reibungskoeffizienten. Besonders bevorzugt wird synthetischer Dolomit eingesetzt, da dieser aufgrund seiner sehr feinen Plattenstruktur zu einem günstigen Deformations- und Fließverhalten eines resultierenden Wischgummiprofils führt.

Um eine gute Anbindung der genannten Füllstoffe an die aus Gummikomponenten gebildete Matrix des Gummimaterials zu ermöglichen, werden die genannten Füllstoffe vor ihrer Vermischung mit den Gummikomponenten beispielsweise in geeigneter Weise oberflächenmodifiziert, um eine chemische Anbindung der Füllstoffpartikel an die Gummimatrix während einer nachfolgenden Vernetzungsreaktion des entstehenden Gummimaterials zu gewährleisten. Weiterhin ermöglicht eine Oberflächenmodifizierung der verwendeten Füllstoffe ein besseres Mischungsverhalten, eine verbesserte Dispersion der Füllstoffpartikel in der Gummimischung, eine geringere Viskosität der Gummimischung sowie auch eine Verbesserung funktionaler Eigenschaften der Füllstoffpartikel, wie eine verbesserte Hitzebeständigkeit, eine verbesserte Verformungsresistenz, eine geringere Absorption von Wasser oder anderen Fluiden bzw. eine Veränderung eines hydrophilen Charakters der resultierenden Gummimischung hin zu einem hydrophoben Charakter.

So kann bspw. zur Oberflächenmodifizierung von Bariumsulfat dieses mit einem Silangruppen enthaltenden Polysiloxan behandelt werden. Da jedoch Bariumsulfat und Dolomit aufgrund der geringen Zahl an oberflächennahen Hydroxigruppen in manchen Fällen nur unvollständig mit Silanen zu modifizieren sind, kann vor der Silanisierung des Füllstoffs eine Aufbringung einer oberflächlichen Silikat-, Metallhydroxid- oder Metalloxidschicht erfolgen. Auf diese Weise wird die Oberfläche der Füllstoffpartikel leichter silanisierbar. So kann der Füllstoff bspw. zunächst mit einer Oberflächenschicht aus Barium-, Natrium- und/oder Kaliumsilikat versehen werden.

Bei der Darstellung synthetischen Bariumsulfats kann eine reaktive Oberfläche erzeugt werden, indem als Füllstoff ein Bariumsulfat eingesetzt wird, welches mittels Copräzipitation von Bariumsulfat mit einem Bariumsilikat gewonnen wird. Dabei umfasst das Bariumsulfat Bariumsilikat bspw. mit einem Anteil von 0,1 bis 50 Gew.%, vorzugsweise von 0,1 bis 10 Gew.%. Analog kann eine reaktive Form des Dolomits als Füllstoff erzeugt werden. Dazu wird ein Copräzipitat des Calcium-Magnesium-Carbonats mit einem Calcium- oder Magnesium-Silikat hergestellt.

Zur Oberflächenmodifizierung der Füllstoffpartikel ist eine Behandlung mit geeigneten Silanen vorgesehen. Dabei eignen sich insbesondere mercaptofunktionalisierte Silane bspw. in Form von polysulfidhaltigen Silanen wie Bis(3-triethoxysilylpropyl)tetrasulfan (TESPT), amino- oder vinylfunktionalisierte Silane, thiocyanatofunktionalisierte Silane wie bspw. γ -Thiocyanatopropyltriethoxysilan (TCPTS), epoxy- oder methacrylatfunktionalisierte Silane, alkyl- oder halogenfunktionaliserte Silane wie bspw. γ-Chlorpropyltriethoxysilan (CI-PTES) und/oder phenyl- oder ureidofunktionalisierte Silane.

Andere Möglichkeiten der Oberflächenmodifizierung sind die Behandlung mit geeigneten mehrwertigen Alkoholen wie Glykolen, Glycerol oder Carbonsäuren wie beispielsweise Stearinsäure, die Behandlung mit bestimmten Vernetzungsbeschleunigern für Gummimaterialien wie Diphenylguanidin (DPG), Di-Orthotolylguanidin (DOTG) oder mit basischen Verbindungen wie Triethanolamin, sekundären Aminen oder anderen polyvalenten Aminen. Alternativ kann eine Oberflächenbehandlung mittels Organotitanaten, Organozirconaten oder geeigneten funktionalisierten Polymeren wie bspw. säurefunktionalisierten Polymeren, die in Seitenketten oder als Copolymerisate Säure- oder Anhydridgruppen aufweisen.

Diese Oberflächenmodifizierung kann kombiniert werden mit Vorbehandlungsmethoden für Partikel wie Air-Floating, Umkristallisieren, Hydrozyklonen oder Kalzinieren oder Kombinationen dieser genannten Methoden. Gegebenenfalls können zusätzlich farbgebende Füllstoffe zugegeben werden wie beispielsweise Eisenoxide oder Titandioxide sowie organische Farbstoffe. Die derart vorbehandelten Füllstoffpartikel werden mit unvernetzten Vorstufen der das Gummimaterial bildenden Gummikomponenten vermischt und einer Vulkanisation zur Vernetzung der Gummikomponenten unterzogen. Es resultieren Gummimaterialien, die ein für Wischgummis von Wischblättern für Scheibenwischer besonders geeignetes Eigenschaftsprofil aufweisen. Beispielhaft werden im Folgenden Zusammensetzungen von Gummimaterialien (in Gewichtsteilen) genannt.

| **Ausführungsbeispiel** | **1** | **2** | **3** | **4** | **5** | **6** |
|---|---|---|---|---|---|---|
| Polychloroprengummi | 100 | 100 | 100 | 100 | 100 | 100 |
| Magnesiumoxid | 4 | 4 | 4 | 4 | 4 | 4 |
| Antioxidant | 2 | 2 | 2 | 1,5 | 2,5 | 2,5 |
| Prozesshilfsmittel | 1,5 | 1 | 2 | 2 | 3 | 3 |
| Stearinsäure | 0,5 | 0,5 | 1 | 0,5 | 1 | 1 |
| Farbpigmente | | 2 | | | | 3 |
| Calciumoxid | 5 | | 5 | | 5 | 5 |
| Ruß | | | | | 30 | |
| Bariumsulfat | 30 | | 60 | | 50 | |
| Calciumhydroxid | | | | | | 15 |
| Dolomit | | 60 | | 40 | | |
| Kieselsäure | 40 | | | | | 30 |
| Calciumsilicat | | | | 30 | | |
| Magnesiumcarbonat | | | | | | 30 |
| Titandioxid | | 15 | | 10 | | |
| Eisenoxide | 5 | | 4 | 3 | | |
| Weißpigmente | | | | 20 | | |
| Mercaptofunctionalisierte Silane | 3 | | | 1,5 | | 1 |
| Polyethylenglycol | | 4 | 2 | | 4 | 2 |
| Glycerol | | | 1 | | | |
| Weichmacher | 15 | 15 | 15 | 15 | 20 | 15 |
| Schwefel | 1 | 0,8 | 1 | 0,8 | 1 | 1 |
| ZnO | 5 | 5 | 5 | 5 | 5 | 5 |
| Beschleuniger | 3 | 4 | 3.5 | 4 | 3 | 4,25 |
| | | | | | | |

| **Ausführungsbeispiel** | **7** | **8** | **9** | **10** | **11** | **12** |
|---|---|---|---|---|---|---|
| Naturkautschuk | 100 | 40 | 100 | 100 | 100 | 50 |
| Polychloroprengummi | | 60 | | | | 50 |
| Mastizierhilfsmittel | 0,25 | 0,25 | 0,25 | 0,25 | 0,25 | 0,25 |
| Antioxidant | 1,5 | 2,5 | 3 | 2,5 | 3 | 2 |
| Antiozonant | 2 | 2,5 | 3 | 3 | 2,5 | 3,5 |
| Paraffinwachs | 1,5 | | 1 | | 1 | 2 |
| Calciumoxid | | 5 | | 5 | | 5 |
| Prozesshilfsmittel | 2 | 1,5 | 3 | 2,5 | 3 | 2 |
| Stearinsäure | 1 | 1 | 1,5 | 1 | 1,5 | 1 |
| Farbpigmente | | | 1 | 2,5 | | |
| Ruß | | 25 | | | 20 | |
| Bariumsulfat | | 50 | | | | 60 |
| Calciumhydroxid | | | 20 | | 15 | |
| Dolomit | 60 | | | 70 | | |
| Gefällte Kieselsäure | | | | | 40 | |
| Natürliche Kieselsäure | | | 30 | | | |
| Silicate | | | | | | |
| Ton | | | 25 | | | |
| Titandioxid | 20 | | | | | 10 |
| Eisenoxid | 3 | | 5 | | | 4 |
| Weißpigment | | | | | | |
| Mercaptofunktionalisierte Silane | | | 2 | | 2,5 | |
| Polyethylenglycol | 2 | 2 | | | | 4 |
| Weichmacher | 20 | 15 | 15 | 15 | 20 | 15 |
| Schwefel | 1,5 | 1,5 | 2 | 1,5 | 2 | 2 |
| ZnO | 5 | 5 | 5 | 5 | 5 | 5 |
| Beschleuniger 1 | 1,5 | | 2 | | 1,5 | 2 |
| Beschleuniger 2 | 0,75 | 2 | 1 | 2,5 | 1,5 | 1,5 |
| Beschleuniger 3 | 2 | 1 | | 1 | 1,5 | |
| Beschleuniger 4 | | 1 | | | | |
| Schwefeldonor | 1 | | | 1 | | |
| Retarder | 1 | | | | 1 | |
| | | | | | | |

| **Ausführungsbeispiel** | **13** | **14** | **15** | **16** | **17** | **18** |
|---|---|---|---|---|---|---|
| EPDM | 100 | 60 | 50 | 100 | 100 | 50 |
| Naturkautschuk | | 40 | 50 | | | 50 |
| Mastizierungshilfsmittel | | 0,25 | 0,25 | | | 0,25 |
| Antioxidant | 1,5 | | 1,5 | | 1,5 | |
| Calciumoxid | | 5 | | 5 | | 5 |
| Prozesshilfsmittel | 2 | 3 | 2,5 | 2 | 2 | 3 |
| Stearinsäure | 1 | 1 | 1 | 1 | 1 | 1 |
| Farbpigmente | | | 3 | 2,5 | 3 | |
| Ruß | | 30 | | | | |
| Bariumsulfat | 50 | | 70 | 20 | | |
| Calciumhydroxid | 20 | 20 | | | | |
| Dolomit | | | | | 70 | 35 |
| Gefällte Kieselsäure | | 40 | | | | |
| Natürliche Kieselsäure | | | | | | |
| Calciumsilicat | | | | | | |
| Aluminiumsilicat | | | | 40 | | |
| Dolomit | | | | | | |
| Kaolin | | | | | | 45 |
| Titandioxid | 15 | | | 10 | | 10 |
| Eisenoxide | 5 | | | | | 4 |
| Weißpigment | | | | | | |
| Mercaptofunktionalisierte Silane | | 2 | | 1,5 | | |
| Aminofunktionalisierte Silane | | | | | | 2 |
| Polyethylenglycol | 2 | | 2 | | 2,5 | 3 |
| Weichmacher | 15 | 20 | 15 | 15 | 20 | 20 |
| Schwefel | 1 | 1,5 | 1 | 1,5 | 1,5 | 2 |
| ZnO | 5 | 5 | 5 | 5 | 5 | 5 |
| Beschleuniger 1 | 2 | 2 | | 1,5 | 2,5 | 2 |
| Beschleuniger 2 | 1 | 1 | 1,5 | | 1 | 1 |
| Beschleuniger 3 | 0,8 | 0,75 | 1,5 | 1 | 1 | 0,75 |
| Beschleuniger 4 | 1,2 | 1 | 1,5 | 2 | | 1 |
| Schwefel donor | 1 | | 1 | | 1 | |
| Retarder | | | 1 | | | 1 |
| | | | | | | |

| **Ausführungsbeispiel** | **19** | **20** | **21** | **22** | **23** | **24** |
|---|---|---|---|---|---|---|
| Naturkautschuk | | | | | | 50 |
| EPDM | 100 | 70 | 100 | 100 | 100 | 50 |
| EPM | | 30 | | | | |
| Antioxidant | 1 | | 1 | | 1 | 1,5 |
| Calciumoxid | | 5 | | 5 | | 5 |
| Prozesshilfsmittel | 4 | 3 | 4 | 2 | | 3 |
| Stearinsäure | 0,5 | 0,5 | 1 | 1 | 1 | 0,5 |
| Farbpigmente | 5 | | | | | |
| Ruß | | | | 30 | | |
| Bariumsulfat | 60 | | | | | 40 |
| Calciumhydroxid | | | 15 | 20 | | |
| Dolomit | | 70 | 40 | | 30 | |
| Gefällte Kieselsäure | | | | 25 | | |
| Natürliche Kieselsäure | | | | | | 40 |
| Silicate | | | | | 45 | |
| Ton | | | | 15 | | |
| Kaolin | | | 35 | | | |
| Titanidioxid | | 15 | | | | |
| Eisenoxide | | 5 | 4 | | | |
| Weißpigment | | | | | | |
| Vinylfunktionalisierte Silane | | | | 1 | 2 | 2 |
| Polyethylenglycol | | | 3 | 2 | | |
| Weichmacher | 15 | 15 | 20 | 15 | 20 | 15 |
| ZnO | 5 | 5 | 5 | 5 | 5 | 5 |
| Retarder für Peroxidhärtung | | | 0,25 | | | |
| Peroxide | 4,5 | 5 | 5 | 6 | 6 | 4 |
| | | | | | | |

## Patentansprüche

1. Gummimaterial eines Wischblatts für Scheibenwischer, umfassend eine Gummikomponente sowie mindestens ein Füllstoff, wobei das Gummimaterial Russ mit einem Anteil von weniger als 40 Gew% bezogen auf den Gesamtgehalt an Füllstoffen enthält, **dadurch gekennzeichnet, dass** ein Füllstoff des Gummimaterials ein Erdalkalisulfat, ein Erdalkalihydroxid oder ein binaeres Erdalkalicarbonat ist.

2. Gummimaterial nach Anspruch 1, **dadurch gekennzeichnet, dass** das binäre Erdalkalicarbonat Dolomit ist.

3. Gummimaterial nach einem der Ansprüche 1 bis 2, **dadurch gekennzeichnet, dass** der Füllstoff silanisiert ist.

4. Gummimaterial nach Anspruch 3, **dadurch gekennzeichnet, dass** der Füllstoff mittels einem Aminosilan, einem Mercaptosilan oder mittels einem vinylgruppenhaltigen Silan oberflächenmodifiziert ist.

5. Gummimaterial nach Anspruch 1, **dadurch gekennzeichnet, dass** der Füllstoff mittels einem Polyalkohol, einer Carbonsäure, einem Derrivat des Guanidins und/oder einem polyvalenten Amin oberflächenmodifiziert ist.

6. Gummimaterial nach einem der vorhergehenden Ansprüche, **dadurch gekennzeichnet, dass** zusätzlich ein Eisenoxid oder Titandioxid enthalten ist.

7. Verfahren zur Herstellung eines Gummimaterials nach einem der vorhergehenden Ansprüche, **dadurch gekennzeichnet, dass** zunächst ein Füllstoff mittels einer der in den Ansprüchen 4 oder 5 genannten Substanzen oberflächenmodifiziert wird, wobei der Füllstoff ein Erdalkalisulfat, ein Erdalkalihydroxid oder ein binaeres Erdalkalicarbonat ist, dann mit einer unvernetzten Vorstufe einer Gummikomponente des Gummimaterials vermischt und die Mischung einer Vernetzungsreaktion unterzogen wird.

8. Verfahren nach Anspruch 7, **dadurch gekennzeichnet, dass** der Füllstoff vor der Oberflächenmodifizierung einer Air-Flotation, einem Hydrozyklonierverfahren, einer Umkristallisation oder einem Kalziniervorgang unterzogen wird.

## Claims

1. Rubber material of a wiper blade for windscreen wipers, comprising a rubber component and also at least one filler, where the rubber material comprises, based on the total content of fillers, a proportion of less than 40% by weight of carbon black, **characterized in that** a filler of the rubber material is an alkaline earth metal sulphate, an alkaline earth metal hydroxide or a binary alkaline earth metal carbonate.

2. Rubber material according to Claim 1, **characterized in that** the binary alkaline earth metal carbonate is dolomite.

3. Rubber material according to Claim 1 or 2, **characterized in that** the filler has been silanized.

4. Rubber material according to Claim 3, **characterized in that** the filler has been surface-modified by means of an aminosilane or a mercaptosilane or by means of a silane containing vinyl groups.

5. Rubber material according to Claim 1, **characterized in that** the filler has been surface-modified by means of a polyalcohol, a carboxylic acid, a derivative of guanidine and/or a polyvalent amine.

6. Rubber material according to any of the preceding claims, **characterized in that** an iron oxide or titanium dioxide is also present.

7. Process for producing a rubber material according to any of the preceding claims, **characterized in that** a filler is first surface-modified by means of one of the substances mentioned in Claim 4 or 5, where the filler is an alkaline earth metal sulphate, an alkaline earth metal hydroxide or a binary alkaline earth metal carbonate, and then is mixed with an uncrosslinked precursor of a rubber component of the rubber material and the mixture is subjected to a crosslinking reaction.

8. Process according to Claim 7, **characterized in that**, prior to the surface-modification process, the filler is subjected to an air-flotation process, a hydrocyclone-treatment process, a recrystallization process or a calcining procedure.

## Revendications

1. Matériau de caoutchouc pour lame de balai d'essuie-glace, comprenant un composant de caoutchouc ainsi qu'au moins une charge, le matériau de caoutchouc contenant du noir de carbone à une teneur d'au moins 40 % en poids par rapport à la teneur totale en charges,
**caractérisé en ce que**
une charge du matériau de caoutchouc est un sulfate de métal alcalinoterreux, un hydroxyde de métal alcalinoterreux ou un carbonate binaire de métal alcalinoterreux.

2. Matériau de caoutchouc selon la revendication 1, **caractérisé en ce que** le carbonate binaire de métal alcalinoterreux est la dolomite.

3. Matériau de caoutchouc selon l'une des revendications 1 et 2, **caractérisé en ce que** la charge est silanisée.

4. Matériau de caoutchouc selon la revendication 3, **caractérisé en ce que** la surface du matériau de charge est modifiée à l'aide d'un aminosilane, d'un mercaptosilane ou d'un silane contenant des groupes vinyle.

5. Matériau de caoutchouc selon la revendication 1, **caractérisé en ce que** la surface du matériau de charge est modifiée au moyen d'un polyalcool, d'un acide carboxylique, d'un dérivé de guanidine et/ou d'une amine polyvalente.

6. Matériau de caoutchouc selon l'une des revendications précédentes, **caractérisé en ce qu'**il contient en outre un oxyde de fer ou le dioxyde de titane.

7. Procédé de fabrication d'un matériau de caoutchouc selon l'une des revendications précédentes, **caractérisé en ce que** la surface d'un matériau de charge est d'abord modifiée au moyen de l'une des substances citées aux revendications 4 et 5, la charge étant un sulfate de métal alcalinoterreux, un hydroxyde de métal alcalinoterreux ou un carbonate binaire de métal alcalinoterreux, étant ensuite mélangée avec un précurseur non réticulé d'un composant caoutchouc du matériau de caoutchouc, le mélange subissant ensuite une réaction de réticulation.

8. Procédé selon la revendication 7, **caractérisé en ce qu'**avant la modification de surface, le matériau de charge subit une flottation à l'air, une opération d'hydrocyclonage, une recristallisation ou une opération de calcination.
